# EUROPEAN PATENT APPLICATION

(11) **EP 2 680 183 A1**
(43) Date of publication of application: **01.01.2014**
(21) Application number: 12305625.1
(22) Date of filing: 04.06.2012
(51) Int. Cl.: G06F 21/70

(54) **Method of managing a memory embedded in an electronic token**

(71) Applicant: Gemalto SA, 92190 Meudon (FR)
(72) Inventor: Foesser, Christophe, 13705 La Ciotat (FR); Botuha, Stéphane, 13705 La Ciotat cedex (FR)

(57) **Abstract**

The invention is a method for managing a nonvolatile memory embedded in an electronic token that comprises an application. The electronic token is being connected to a device. The method comprises the following steps of
- registering an association between the application and an area of the memory,
- detecting a request for access to the area, said request being sent by the device,
- notifying the application of the request.

## Description

### (Field of the invention)

The present invention relates to methods of managing a memory embedded in an electronic token. It relates particularly to methods of managing non-volatile memories.

### (Background of the invention)

Electronic tokens are small devices comprising a memory, a microprocessor and an operating system for computing treatments. In general, electronic tokens comprise a plurality of memories of different types. For example, they may comprise memory of RAM, ROM, EEPROM or Flash type. Electronic tokens have limited computing resources. For example, smart cards are electronic tokens.

The NFC (Near Field Communication) technology is based on the exchanging of data via an electromagnetic field. A NFC reader has an antenna which is able to modulate the electromagnetic field and to provide energy to NFC devices. The NFC reader is usually named a PCD (Proximity Coupling Device). The NFC device may be a PICC (Proximity Integrated Circuit Card or Proximity Card) or may embed components which act as logical PICC. The PICC and the PCD may communicate thanks to an inductive coupling in a field frequency equal to 13.56 MHz. In particular, the ISO14443 and ISO18092 standards provide modulation technologies and communication protocols which may be used in NFC domain.

A contactless reader may easily read or write a non-volatile memory embedded in a NFC device.

There is a need for informing an entity that an attempt to access the memory has occurred, the memory and this entity being embedded in an electronic token.

### (Summary of the Invention)

An object of the invention is to solve the above mentioned technical problem.

The object of the present invention is a method for managing a non-volatile memory which is embedded in an electronic token comprising an application. The electronic token is connected to a device. The method comprises the following steps:
- registering an association between the application and an area of the non-volatile memory,
- detecting a request for access to the area, said request being sent by the device,
- notifying the application of the request.

Advantageously, the request may aim at writing a data in the area and the data may be sent to the application when notifying the application.

Advantageously, the application may perform a treatment after being notified and the request for access to the area may be denied if said treatment provides an unsuccessful result.

Advantageously, the device may be used by a user and the treatment may be to get approval from the user.

Advantageously, the treatment may be to check if specific rights have been granted.

Advantageously, the application may send a message to another entity after being notified.

Advantageously, the application may be notified after the area has been accessed.

Advantageously, an association between another application and the area may have been registered and the notifying step may be managed according to preset priority rules and/or chaining rules.

Another object of the invention is an electronic token comprising an application, a non-volatile memory and a communication interface. The electronic token comprises an enrolling means adapted to register an association between the application and an area of the memory. The electronic token comprises a notifying means adapted to detect a request for access to the area and to notify the application of the request, said request being received through the communication interface.

Advantageously, the electronic token may comprise an authorizing means adapted to get a result provided by the application and to deny access to the area if said result is unsuccessful.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of an electronic token according to the invention; and
- Figure 2 is an example of a system comprising a contactless reader, a host device and an electronic token according to the invention.

### (Detailed description of the preferred embodiments)

The invention may apply to any types of electronic token comprising a non-volatile memory and intended to receive commands targeting the non-volatile memory.

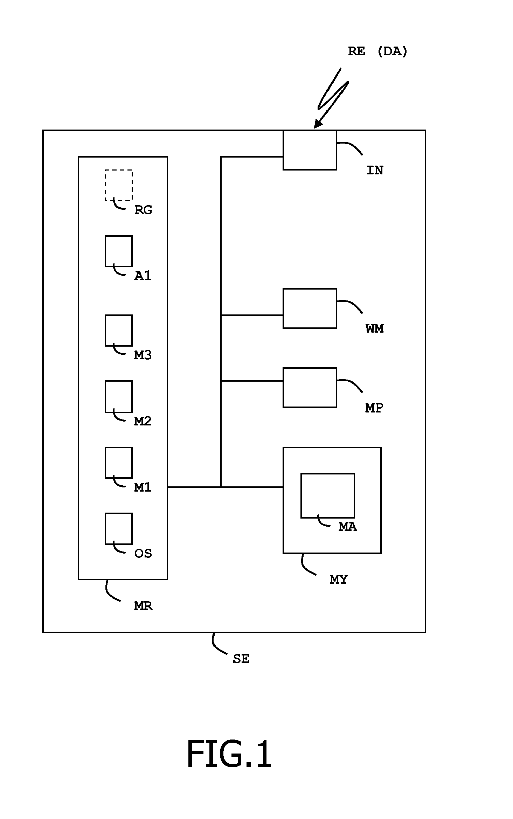

**Figure 1** shows the architecture of an electronic token SE of smart card type according to a preferred embodiment of the invention.

The electronic token SE comprises two non-volatile memories MR and MY, a microprocessor MP, a working memory WM and a communication interface IN allowing communication with a host device.

The working memory WM may be of RAM (Random Access Memory) type. The non volatile memories MR and MY may be EEPROM or flash memory. The non volatile memory MY comprises an area MA. For instance, the area MA may be a memory block, a memory sector, a single byte or any range of several consecutive bytes. The non volatile memory MR comprises an operating system OS, an application A1 and three means M1, M2 and M3. The enrolling means M1 is capable of registering an association between an area of the memory MY and an application embedded in the electronic token SE. In particular, the enrolling means M1 may register an association between the application A1 and the area MA.

The association registration may be carried out by storing a set in a dedicated Registry RG. For instance, the set may comprise an identifier of the application A1 and an identifier of the area MA. The identifier of the area MA may be a memory sector number, a memory block number or a range of memory addresses. The identifier of the area MA may be a so-called memory mapping. The identifier of the area MA is defined at a very low physical level (i.e. at the physical address level).

Advantageously, the recorded set may comprise a timing data which specifies whether the application A1 must be notified after or before the access to the memory area MA.

Advantageously, the recorded set may comprise an authorizing data which specifies whether the access to the memory area MA must be controlled by a result provided by the application A1.

Advantageously, the recorded set may comprise a management rule which specifies how to handle the notification mechanism when several requests targeting the same memory area are detected. For example, the management rule may specify that the associated application is notified only once for a current session. Such a management rule may prevent the notifying means M2 to notify the application several times while the power is kept on at the token side. In order to comply with high security requirements, the management rule may specify that the associated application is always notified as soon as a relevant request is identified.

Advantageously, the recorded set may comprise a priority rule which specifies how the application should be notified if several applications are associated with the same memory area. In particular, the priority rule may specify the order in which applications must be notified.

The priority rule can also specify whether a specific chaining must be followed. For example, notification of the application A1 may be required only if other associated applications have already been notified and have sent information indicating that they allow application A1 to be notified.

The association registration may be implemented through a table, a list or any relevant container. For example, a dedicated table may contain a start sector and a number of consecutive memory sectors which belongs to the targeted memory area to be associated to an application. Alternatively, a list may contain a set of memory blocks (continuous or separated) and identifier of the associated application.

The notifying means M2 is capable of detecting the receipt of a request RE for access to the area MA. The request RE is intended to be received by the communication interface IN. The notifying means M2 is capable of notifying the application A1 of the request RE when the request RE is received from a connected device through the communication interface IN. For example, the notifying step may be carried out through a call to an Application Programming Interface (API) of the associated application. Alternatively, the notifying step may be performed through a call to a specific application interface.

The request RE may comprise a parameter DA like a string to be written in the memory area MA. The notifying means M2 may be capable of sending the parameter DA to the application A1 during the notification step. Thus the application A1 may take the received parameter DA into account when performing a subsequent treatment.

The application A1 is able to perform a treatment after being notified. The authorizing means M3 is capable of getting a result provided by the application A1 and of denying access to the area MA if the result is unsuccessful. Thus the request RE fails if the result provided by the application A1 is unsuccessful.

The communication interface IN may be a contactless interface which allows the electronic token SE to communicate with a contactless reader without using an intermediate host device.

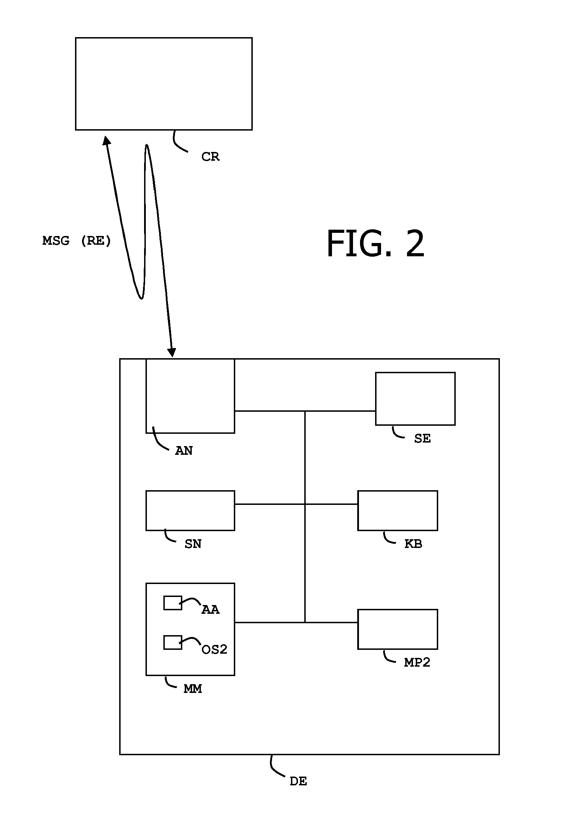

**Figure 2** shows an example of a system comprising a contactless reader CR, a host device DE and an electronic token SE according to the invention.

The electronic token SE is similar to the token of Figure 1. The host device DE comprises a non-volatile memory MM, a microprocessor MP2, a display SN, a keyboard KB, an antenna AN and the electronic token SE. The electronic token SE may be connected either in a fixed manner or in a removable manner to the host device DE.

The memory MM comprises an operating system OS2 and an application AA.

In a preferred embodiment, the host device DE is a mobile phone.

The contactless reader CR is able to send messages to the host device DE via a contactless protocol. The contactless reader CR is intended to send a message MSG which comprises the request RE targeting the memory area MA. The message MSG is received by the antenna AN and the request RE is forwarded to the electronic token SE.

The notifying means M2 checks if at least one application is associated with the targeted memory area MA. Since the application A1 is assumed to have been previously registered with the area MA, the notifying means M2 notifies the application A1 according to the rules stored in the registry RG.

At a further step, the application A1 may try to get approval from the user of the device DE. For example, the application A1 may display on the screen SN of the device DE a message asking the user consent. Then the application A1 retrieves the answer entered by the user through the keyboard KB and provides the authorizing means M3 with the answer. Then the authorizing means M3 authorizes or denies the access to the area depending of the received answer.

Thanks to the invention, a user has possibility to validate or not the execution of an incoming request targeting a specific memory area. This feature is particularly useful against unwanted access. In particular, the invention helps thwart the so-called relay attacks where a hacker accesses the memory of a PICC without the knowledge of the user. When the electronic token SE is a contactless device, the user may be warned either by any relevant feature embedded in the electronic token SE. For instance, an embedded led or display may be used for warning the user of an access attempt.

Thanks to the invention, the application A1 may ask the user to enter a PIN code and authorize the execution of the request RE only if the PIN has been correctly entered.

Alternatively, the application A1 may check if specific rights have been previously granted. These specific rights may be granted in the token SE itself, in the host device DE or in any other machine which may be accessed by the application A1. Advantageously, the specific rights are stored in the electronic token SE for saving time and being able to send a result in a short time. The specific rights may be a credential associated to the user for instance. In case of a plurality of requests aiming at accessing the memory area MA, the first agreement given by the user may remain valid for furthers requests.

This optional solution allows keeping the agreement/authorization of the user for a preset duration. Thus, specific rights may be persistent even if the power provided by the contactless reader is lost. This optional solution may be managed as a pre-authorization given by a user.

Alternatively, the application A1 may perform a treatment without sending a result to the authorizing means M3. In this case, the application A1 does not control the access to the target memory area. For example, the application A1 may inform the user of the access by any relevant means like a message on the display SN of the device, lighting of a led or an audio message. Thanks to the invention, the electronic token has possibility to warn the user of the host device DE when a request targeting a specific memory area is received.

In response to the notification, the application A1 can send a message to another entity which is located either in the electronic token itself or outside. For example, the application A1 may send a message to the application AA which is stored in the device DE. For instance the application AA may be in charge of the management of the Human-Machine interface while the application A1 is in charge of computations related to the security.

The application A1 may send a message to another application located in the electronic token SE. For example, the other application may store the received message and trigger an action when a preset threshold is reached. For instance, the other application may send the set of stored messages to a distant server on receipt of the fifth message coming from the application A1.

The application A1 may also send a message to a remote server. Such a sending may be performed via the Over-The-Air mechanism when the token SE is a telecom token like a UICC (Universal Integrated Circuit Card) or SIM card.

Alternatively, the notifying means M2 may notify the application A1 after the execution of the request RE. In this case, the application A1 cannot control the access to the memory area. This case is well-suited for warning the user of tracking a memory usage. For example the application A1 may trigger the display of a message like "successfully completed" for telling the user that the writing operation has been successfully performed.

In one embodiment, the means M2 notifies the application A1 by sending a data reflecting the receipt of the request RE. This sent data may be very light. For example the application A1 may just be aware that an access request has been received for the target area, without any details about the kind of access or the possible updated value. Alternatively, the data sent with the notification may contain detailed information. For instance, when the request RE aims at writing a string DA into the memory area MA, the application A1 may be notified with the kind of access (i.e. "writing access") and the new value to be written. Thanks to the invention, the application A1 may control that a value is going to be updated with a new value. For instance, if the writing operation targets an area where a secret key is stored, the application A1 is informed of the change of the secret key value and may provide another entity with these elements. Thus the other entity will be able to use the new secret key.

Another advantage of the invention is to provide a solution for notifying an entity which is distinct from the memory management system. The enrolment of the association between an area and an application can be dynamically done and dynamically canceled. Thus, it is possible to temporary activate the notification mechanism for an application.

The invention may be used for notifying one or several application of an access request to a plurality of memory areas.

Advantageously, the application A1 may be activated by the notifying means M2 during the notification step. This activation (i.e. wake-up) guarantees that the application A1 takes the notification into account.

The means M1, M2 and M3 may be implemented as distinct or merged hardware components. In particular, the notifying means M2 may be managed by the microcontroller of the non-volatile memory MY.

The memory MR and MY may be merged in a unique memory.

The invention is well-suited for tokens compliant with Mifare ® and Felica ® specifications.

In the example of Figure 2, the message MSG sent by the contactless reader CR requires a response before a preset duration according to protocol specifications. The message MSG corresponds to a request targeting a memory area of the token SE. If a user's agreement is needed before executing the request, the response to the message MSG may be unavailable when the preset duration elapsed. Advantageously, data for requesting additional time may be sent to the reader CR in order to get an extra duration before sending back the response corresponding to the message MSG. Alternatively, the reader CR may send the same message MSG twice in a double tap gesture made by the user.

## Claims

1. A **method** for managing a non-volatile memory (MY) embedded in an electronic token (SE) comprising an application (A1), said electronic token (SE) being connected to a device (DE),
**characterized in that** the method comprises the following steps:
- registering an association between the application (A1) and an area (MA) of the memory (MY),
- detecting a request (RE) for access to the area (MA), said request (RE) being sent by the device (DE),
- notifying the application (A1) of the request (RE).

2. A method according to claim 1, wherein the request (RE) aims at writing a data (DA) in the area (MA) and wherein the data (DA) is sent to the application (A1) when notifying the application (A1).

3. A method according to any one of claims 1 to 2, wherein the application (A1) performs a treatment after being notified and wherein the request (RE) for access to the area (MA) is denied if said treatment provides an unsuccessful result.

4. A method according to claim 3, wherein the device (DE) is used by a user and wherein the treatment is to get approval from said user.

5. A method according to claim 3, wherein the treatment is to check if specific rights have been granted.

6. A method according to claim 1, wherein the application (A1) sends a message to another entity (AA) after being notified.

7. A method according to claim 1, wherein the application (A1) is notified after the area (MA) has been accessed.

8. A method according to claim 1, wherein an association between another application (A2) and the area (MA) has been registered and wherein the notifying step is managed according to preset priority rules and/or chaining rules.

9. An **electronic token** (SE) comprising an application (A1), a non-volatile memory (MY) and a communication interface (IN),
**characterized in that** the electronic token (SE) comprises an enrolling means (M1) adapted to register an association between the application (A1) and an area (MA) of the memory (MY) and a notifying means (M2) adapted to detect a request (RE) for access to the area (MA) and to notify the application (A1) of the request (RE), said request (RE) being received through the communication interface (IN).

10. An electronic token (SE) according to claim 9, wherein the electronic token (SE) comprises an authorizing means (M3) adapted to get a result provided by the application (A1) and to deny access to the area (MA) if said result is unsuccessful.

11. A **device** (DE) comprising an electronic token (SE) and an antenna (AN),
**characterized in that** said electronic token (SE) is the electronic token (SE) of claim 9 and **in that** a message (MSG) comprising the request (RE) is received through the antenna (AN).
